# EUROPEAN PATENT SPECIFICATION

(11) **EP 2 233 453 B1**
(45) Date of publication and mention of the grant of the patent: **01.07.2015**
(21) Application number: 10250414.9
(22) Date of filing: 08.03.2010
(51) Int. Cl.: C04B 38/00, F01N 3/28

(54) **Honeycomb structure**
Wabenstruktur
Structure en nid d'abeille

(30) Priority: 19.03.2009 JP 2009068415
(43) Date of publication of application: 29.09.2010
(73) Proprietor: NGK Insulators, Ltd., Nagoya-City, Aichi Pref. 467-8530 (JP)
(72) Inventor: Yamada, Toshio, Nagoya City Aichi-ken, 467-8530 (JP); Nagata, Koji, Nagoya City Aichi-ken, 467-8530 (JP)
(74) Representative: Naylor, Matthew John

(56) References cited:
- EP-A1- 1 508 402
- EP-A1- 1 591 431
- EP-A1- 1 977 808
- EP-A2- 2 236 481
- US-A1- 2006 019 061

## Description

### Background of the Invention and Related Art Statement

The present invention relates to a honeycomb structure, more specifically, to a honeycomb structure capable of inhibiting clogging of the cells on the inflow side with trapped particulate matter and capable of inhibiting a honeycomb segment from being detached from a bonding member when combustion of trapped particulate matter (regeneration) is repeated.

A ceramic honeycomb structure excellent in thermal resistance and corrosion resistance is employed as a carrier for a catalytic device or a filter used for an environmental measure, collection of a specific material or the like in various fields such as chemistry, electric power, and iron and steel. In particular, recently, a honeycomb structure plugged alternately in cell open portions on both the end faces as a plugged honeycomb structure is frequently used as a diesel particulate filter (DPF) for trapping particulate matter (PM) discharged from a diesel engine or the like. As a material for the honeycomb structure used in a high temperature corrosive gas atmosphere, silicon carbide (SiC), cordierite, aluminum titanate (AT), and the like, which are excellent in thermal resistance and chemical stability, are suitably used.

Since silicon carbide has relatively large thermal expansion coefficient, a honeycomb structure formed with silicon carbide as the framework may cause a defect due to thermal shock upon use if the size is large. In addition, a defect may be caused due to thermal shock upon combusting and removing trapped particulate matter. Therefore, in the case of manufacturing a honeycomb structure using silicon carbide as the framework and having a predetermined or larger size, generally, a plurality of small plugged honeycomb structured segments are manufactured, and then they are bonded together to obtain one large bonded article. The outer periphery of the bonded article is subjected to coarse machining and grinding to obtain a plugged honeycomb structure having a desired shape such as a cylindrical shape (see, e.g., JP-A-2003-291054). The bonding of the segments is performed by the use of a bonding material, which is applied on a side face of a predetermined segment, and a plurality of segments are bonded together at the side faces to obtain a honeycomb structure where a plurality of segments are bonded by means of the bonding member.

Such a honeycomb structure formed by bonding honeycomb segments with a bonding material (bonding member) at side faces has a problem of detachment of a honeycomb segment from the bonding member due to repeated heating and cooling when combustion of trapped particulate matter (regeneration) is repeated to sometimes cause separation of the honeycomb structure. In addition, there is a problem of causing clogging in partition walls by the particulate matter deposited in the cells open in the end face on the exhaust gas inflow side. Further, since forming, drying, and firing can not be performed unitarily, there is a problem of many steps such as manufacturing a plurality of segments, bonding them, and grinding.

US-A-2006/0019061, like JP-A-2003-291054, shows a composite honeycomb structure in which honeycomb segments are bonded together at their opposed side faces by bonding material. Each honeycomb segment has cells of relatively larger and smaller cross-sectional areas, arranged alternatingly in each row and column as seen at the end face. The larger cells are plugged at one end face and the smaller cells are plugged at the other end face.

### Summary of the Invention

The present invention has been made in view of the aforementioned problems and aims to provide a honeycomb structure capable of inhibiting clogging of the cells on the inflow side with trapped particulate matter, capable of inhibiting a honeycomb segment from being detached from a bonding member when combustion of trapped particulate matter (regeneration) is repeated, and capable of being formed, dried, and fired as a unitary article.

In order to solve the above problems, the present invention provides the honeycomb structure as set out in claim 1.

Preferably, the height of the protruding portions of the outer peripheral wall is 0.1 to 1.0 mm based on the depressed portion of the outer peripheral wall of the honeycomb segment.

Preferably, in a pair of facing outer peripheral walls of adjacent honeycomb segments, the distance from the depressed portion of one outer peripheral wall to the depressed portion of the other peripheral wall is 0.3 to 3.0 mm.

Preferably, the connecting members have a thickness of 0.20 to 0.45 mm.

According to a honeycomb structure of the present invention, since a honeycomb structure is formed by forming, drying, and firing as a unitary honeycomb structure where the segments are connected with one another, the production process is simplified, and the number of steps and the amount of the raw material to be used are reduced. And, since the outer peripheral wall of each honeycomb segment has protruding portions along the external shape of the first cells and depressed portions along the external shape of the second cells, the contact area between the outer peripheral wall of the honeycomb segment and the bonding member in contact with the honeycomb segment becomes large, thereby increasing bonding strength between the honeycomb segment and the bonding member. Further, adjacent honeycomb segments are connected with each other by connecting members. These can inhibit detachment of the honeycomb segment from the bonding member even if tensile stress and compression stress are alternately applied to the honeycomb segment and the bonding member due to repeated regeneration and can inhibit separation of the honeycomb structure.

In addition, since each of the first cells has an area larger than that of each of the second cells in a cross section perpendicular to the central axial direction in each honeycomb segment, by using the end face on the side where the first cells are open as the exhaust gas inflow side end face, clogging of the inflow side cells (first cells) by the trapped particulate matter can be inhibited.

### Brief Description of the Drawings

[Fig. 1] Fig. 1 is a perspective view schematically showing one embodiment of a honeycomb structure of the present invention.

[Fig. 2] Fig. 2 is an enlarged plan view schematically showing the region A of Fig. 1.

[Fig. 3] Fig. 3 is a plan view schematically showing an enlarged part on one end face side of an embodiment of a honeycomb structure of the present invention.

[Fig. 4] Fig. 4 is a perspective view schematically showing a honeycomb formed article formed in the process of manufacturing an embodiment of a honeycomb structure of the present invention.

[Fig. 5] Fig. 5 is an enlarged plan view schematically showing the region B of Fig. 4.

[Fig. 6] Fig. 6 is a plan view schematically showing an enlarged part on one end face side of a honeycomb structure manufactured in an example.

[Fig. 7] Fig. 7 is a plan view schematically showing an enlarged part on one end face side of a honeycomb structure manufactured in an example.

[Fig. 8] Fig. 8 is an enlarged plan view schematically showing the region C of Fig. 1.

### Reference Numerals

1: cell, 1a: first cell, 1b: second cell, 2: partition wall, 3: outer peripheral wall, 3a: protrudingportion, 3b: depressed portion, 4, 4a, 4b, 4c: honeycomb segment, 5: side face, 6: plugging portion, 7: connecting member, 11: filler layer, 12: outer peripheral portion, 13: end portion on one side, 14: end portion on the other side, 21: honeycomb formed article, 22: gap, 100, 101, 102: honeycomb structure, A: region (region including four honeycomb segments), B: region, C: region (region including a honeycomb segment having an outer peripheral portion), H: height of protruding portion, D1: distance between protruding portions, D2: distance between depressed portions, W1: width of the first cell, W2: width of the second cell, t1: thickness of partition wall, t2: thickness of slanted partition wall, T1: partition wall thickness of protruding portion, T2: partition wall thickness of depressed portion, T3: thickness of outer peripheral slanted partition wall, T4: thickness of connecting member

### Detailed Description of the Invention

Next, embodiments of the present invention will be described in detail with referring to drawings. However, the present invention is by no means limited to the following embodiments.

### (1) Honeycomb structure:

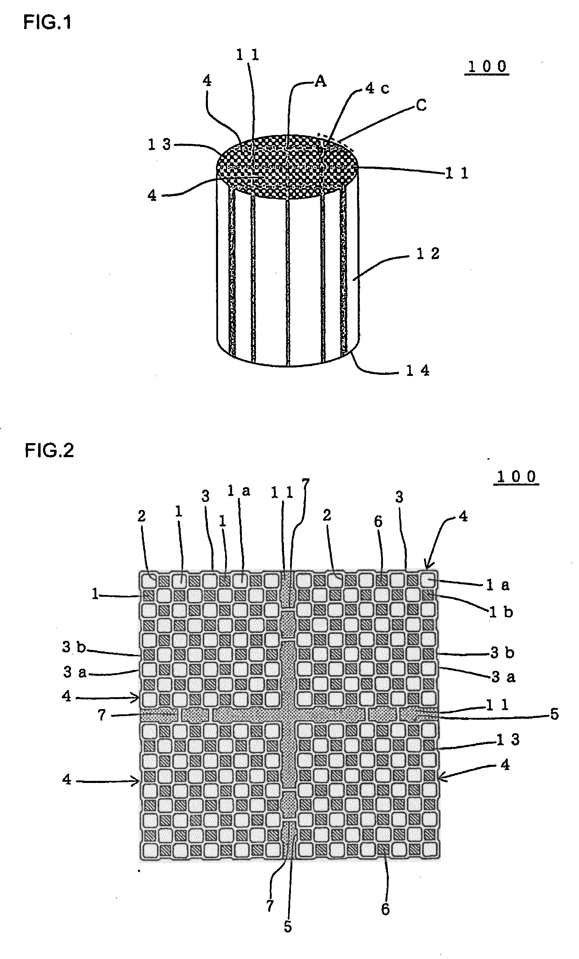

As shown in Figs. 1 and 2, one embodiment of a honeycomb structure of the present invention is provided with a plurality of "honeycomb segments 4" having porous partition walls 2 separating and forming a plurality of cells 1 functioning as fluid passages and an outer peripheral wall 3 located in the outermost periphery, the cells 1 include the first cells 1a each open in an end portion 13 on one side and plugged in the other end portion 14 on the other side and the second cells 1b plugged in the end portion 13 on the one side (having a plugging portion 6 on the end portion 13 on the one side) and open in the other end portion 14 on the other side, the first cells 1a and the second cells 1b being alternately disposed with the first cells 1a having an area larger than that of the second cells 1b in a cross section perpendicular to the central axial direction. The honeycomb segments 4 are disposed with a gap between side faces 5 facing each other, two plate-shaped connecting members 7 for connecting the side faces 5 facing each other and extending from one end portion 13 to the other end portion 14 are provided for each pair of side faces facing each other, and a filler layer 11 disposed in the gap is provided. An outer peripheral wall 3 constituting a side face 5 in contact with the filler layer 11 in the honeycomb segment 4 has protruding portions (protruding portions 3a) along an external shape of the first cells 1a and depressed portions (depressed portions 3b) along an external shape of the second cells 1b. The honeycomb structure 100 has an outer peripheral portion 12 in the outermost periphery thereof. Fig. 1 is a perspective view schematically showing one embodiment of a honeycomb structure of the present invention. Fig. 2 is an enlarged plan view schematically showing the region A of Fig. 1. Fig. 2 is a plan view showing an end portion side of four adj acent honeycomb segments among the honeycomb segments constituting a honeycomb structure of the present embodiment. The end portion side of the honeycomb segments is on end portion side of each cell.

Thus, since a portion along the external shape of the first cell of the outer peripheral wall of each honeycomb segment is formed in a protruding shape, and a portion along the external shape of the second cell of the outer peripheral wall of each honeycomb segment is formed in a depressed shape to increase the contact area between the outer peripheral wall of the honeycomb segment and the bonding member in contact with the outer peripheral wall, bonding strength between the honeycomb segment and the bonding member is increased. Therefore, even when tensile stress and compression stress are alternately applied on the honeycomb segment and the bonding member due to repeated regeneration, detachment of the honeycomb segment from the bonding member can be inhibited, and separation of the honeycomb structure is inhibited. Further, adjacent honeycomb segments are connected by connecting members. These enables to inhibit detachment of the honeycomb segment from the bonding member and separation of the honeycomb structure even when tensile stress and compression stress are alternately applied on the honeycomb segment and the bonding member due to repeated regeneration. in addition, since the first cells have an area larger than that of the second cells in a cross section perpendicular to the central axial direction, by using the end face on the side where the first cells are open as the exhaust gas inflow side end face, clogging of the inflow side cells (first cells) by the trapped particulate matter can be inhibited.

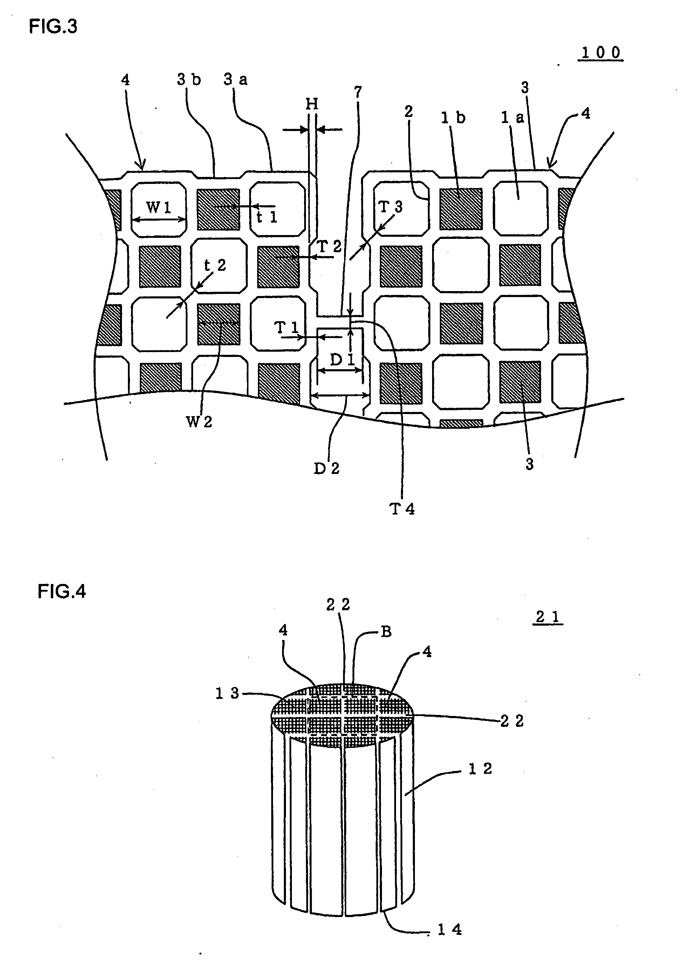

In the honeycomb structure 100 of the present embodiment, the height H (see Fig. 3) of the protruding portions (protruding portions 3a) of the outer peripheral wall 3 is preferably 0.1 to 1.0 mm, more preferably 0.3 to 0.8 mm, based on the depressed portion (depressed portions 3b) of the outer peripheral wall 3 of the honeycomb segment 4. Such a range of the height H of the protruding portions 3a enables to increase bonding strength between the honeycomb segment and the filler layer. When the height H of the protruding portions 3a is below 0.1 mm, an effect of increasing the bonding strength between the honeycomb segment and the bonding member may be lowered. When the height H of the protruding portions 3a is above 1.0 mm, productivity may be deteriorated because attention should particularly be paid to deformation and the like of the honeycomb segment upon forming or firing. Fig. 3 is a plan view schematically showing an enlarged part on one end face side of an embodiment of a honeycomb structure of the present invention. Incidentally, in Fig. 3, the filler layer is omitted.

In a pair of facing outer peripheral walls of adjacent honeycomb segments, the distance (distance between two depressed portions 3b, 3b) D2 from the depressed portion (depressed portion 3b) of one outer peripheral wall to the depressed portion (depressed portion 3b) of the other peripheral wall is preferably 0.3 to 3.0 mm, more preferably 0.9 to 2.4 mm. When D2 is below 0.3 mm, it is sometimes hard to fill the filler. When D2 is above 0.3 mm, pressure loss tends to increase. The "distance D2 from the depressed portion of an outer peripheral wall on one side to the depressed portion of the outer peripheral wall on the other side" is length of a perpendicular line from the depressed portion of the outer peripheral wall on the one side to the depressed portion of the outer peripheral wall on the other side. Therefore, even in the case that the depressed portion of the outer peripheral wall on the one side does not face the depressed portion of the outer peripheral wall on the other side with having a slippage, the distance D2 means length of the perpendicular line drawn from the depressed portion of the outer peripheral wall on the other side to an extension line of depressed portion of the outer peripheral wall on the one side. In the distance D2 between the depressed portions 3b, 3b (distance between the depressed portion 3b and the other depressed portion 3b) is shown by a value obtained by adding twice the height H to D1.

In addition, in the honeycomb structure 100 of the present embodiment, in a pair of the outer peripheral walls 3, 3 facing each other of adjacent honeycomb segments 4, the distance D1 between the protruding portions 3a, 3a is preferably 0.1 to 1.0 mm, more preferably 0.3 to 0.8 mm. When the distance D1 between the protruding portions 3a is below 0.1 mm, the bonding member deforms due to stress upon regeneration to cause collision of the outer peripheral wall with each other. When it is above 1.0 mm, pressure loss upon passing exhaust gas through the honeycomb structure may increase. The "distance between the protruding portions 3a, 3a" is length of the perpendicular line from the protruding portion of the outer peripheral wall on one side to the protruding portion of the other outer peripheral wall on the other side.

In addition, in the honeycomb structure 100 of the present embodiment, in a cross section perpendicular to the central axis, the width W1 of the first cell (see Fig. 3) is 0.8 to 3 mm. In addition, the width W2 of the second cell (see Fig. 3) is 0.7 to 2.8 mm.

In addition, the thickness t1 of the partition wall (partition wall thickness) located between the first cells and the second cells (see Fig. 3) is preferably not larger than the thickness t2 of the slanted partition wall, more preferably smaller than t2. As shown in Fig. 3, the "slanted partition wall" means a partition wall extending in the slanted direction with respect to the direction where the first cells and the second cells are alternately aligned in a cross section perpendicular to the central axis of the honeycomb structure 100 and partition wall located on the extension of a diagonal line and extending in the direction of the diagonal line. In the honeycomb structure shown in Fig. 3, the slanted partition wall is extended in the direction with an angle of inclination of 45° with respect to the direction where the first cells and the second cells are aligned. The partition wall thickness t1 is preferably 0.075 to 1.5 mm. In addition, the slanted partition wall thickness t2 is preferably 0.09 to 1.6 mm.

In the honeycomb structure 100 of the present embodiment, as shown in Fig. 2, in adjacent honeycomb segments 4, the protruding portions face each other, and the depressed portions face each other. Thus, it is preferable that the protruding portions face each other and that the depressed portions face each other in adjacent honeycomb segments 4 in a honeycomb structure of the present invention. However, it is also a preferable embodiment that a protruding portion 3a of a honeycomb segment faces a depressed portion 3b of the adjacent honeycomb segment.

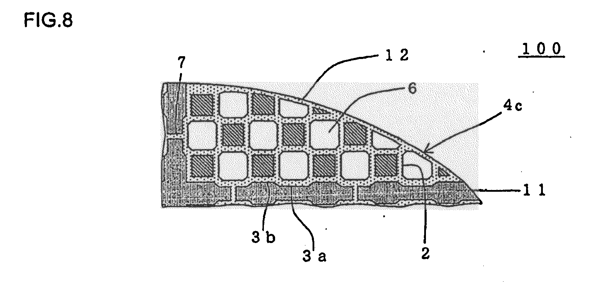

In addition, as shown in Fig. 8, the honeycomb structure 100 of the present embodiment is provided with a honeycomb segment 4c constituting the outermost periphery of the honeycomb structure 100 and having an outer peripheral portion 12. In the honeycomb segment 4c, the side face in contact with the filler layer 11 has an uneven shape along the cell shapes, while the outer peripheral portion 12 does not have an uneven shape but has an arc shape in the cross section perpendicular to the cell extension direction. Fig. 8 is an enlarged plan view schematically showing the region C of Fig. 1.

The honeycomb structure 100 of the present embodiment is provided with two or more plate-shaped connecting members 7 for connecting the side faces 5 facing each other and extending from one end portion 13 to the other end portion 14. The length of the connecting members 7 in a cross section perpendicular to the central axis of the honeycomb structure 100 is preferably the length to make the aforementioned distance D1 between the protruding portions 3a and 3a a desired distance. In addition, the width of the connecting members 7 (thickness of the connecting portion 7: T4) in a plane perpendicular to the central axis of the honeycomb structure 100 is preferably 0.20 to 0.45 mm, more preferably 0.25 to 0.43 mm. When it is below 0.20 mm, the strength of the connecting members 7 is lowered, and the effect in improving bonding strength between the honeycomb segments may be deteriorated. When the width is above 0.45 mm, strain may easily be caused in the honeycomb structure upon drying after extrusion forming or upon firing. In addition, the number of the connecting members 7 between two adjacent segments is 2 or more, preferably 2 to 10, more preferably 2 to 5. When the number is below 2, the connecting member 7 easily breaks to deteriorate the effect in improving bonding strength between the honeycomb segments. In addition, after extrusion forming, the shape is hardly maintained. When the number is above 10, the die for extrusion forming may become expensive for it. The interval between the connecting members 7 is preferably 1 cell or more. In a plane perpendicular to the central axis of the honeycomb structure 100, the connecting members 7 are preferably formed so as to be perpendicular to the surface of the protruding portion 3a and the depressed portion 3b. By this, the connecting members 7 hardly break. In addition, it is preferable that the connecting members 7 are disposed to extend in parallel with the cell 1 extension direction (central axial direction of the honeycomb formed article 100) and connect adjacent honeycomb segments wholly from one end portion to the other end portion.

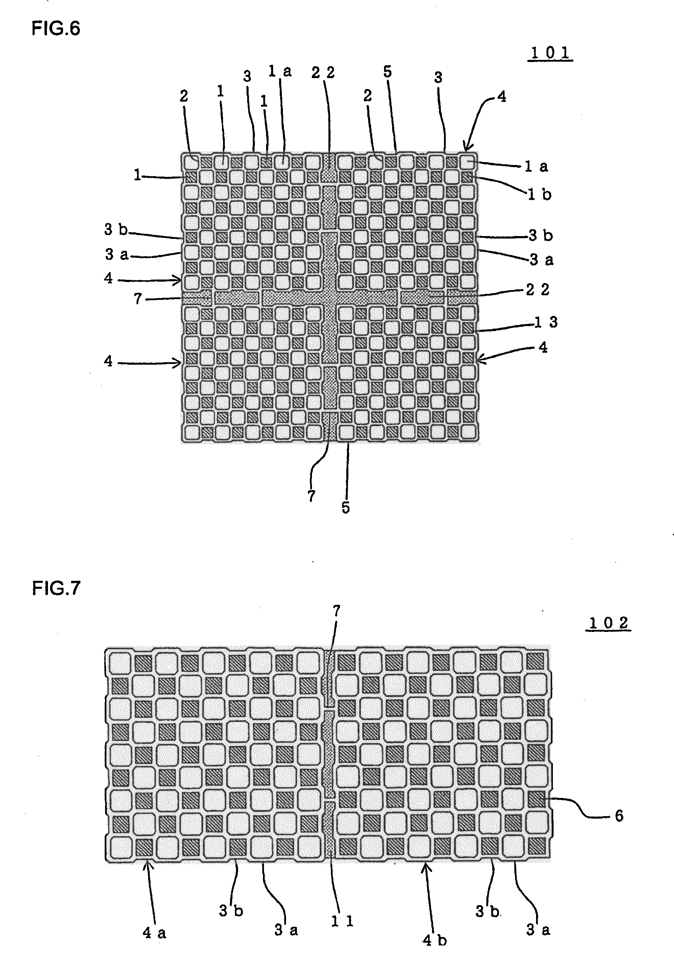

In addition, as shown in Fig. 2, in the honeycomb structure 100 of the present embodiment, it is preferable that the connecting member 7 is disposed in a portion where the partition wall 2 is not connected (protruding portion 3a and/or depressed portion 3b) in the outer peripheral wall 3 of the honeycomb segment 4. In addition, as shown in Fig. 6, it is also a preferable embodiment that the connecting member 7 is disposed at the position where partition wall 2 is connected at a right angle in the outer peripheral wall 3 of the honeycomb segment 4.

A material for constituting the honeycomb structure of the present embodiment is preferably ceramic, more preferably at least one kind selected from the group consisting of silicon carbide, a silicon-silicon carbide based composite material, cordierite, mullite, alumina, spinel, a silicon carbide-cordierite based composite material, lithium aluminum silicate, aluminum titanate, and an iron-chrome-aluminum based alloy because of excellent strength and thermal resistance. Of these, silicon carbide or a silicon-silicon carbide based composite material is particularly preferable. Since silicon carbide has relatively large thermal expansion coefficient, a honeycomb structure formed with silicon carbide as the framework may cause a defect due to thermal shock upon use if the size is large. However, in a honeycomb structure of the present invention, since a plurality of honeycomb segments are disposed adjacently in such a manner that side faces thereof face each other and are bonded together with a filler layer and connecting members, stress due to thermal expansion is relaxed by the filler layer, and generation of a defect in the honeycomb structure can be inhibited. Incidentally, the material for the connecting members is preferably the same as the material for the honeycomb segment.

The honeycomb segment (partition walls constituting the honeycomb segment) constituting a honeycomb structure of the present embodiment is preferably porous. The porosity of the honeycomb segment is 30 to 80%, preferably 40 to 65%. The porosity in such a range enables to decrease pressure loss with maintaining strength. When the porosity is below 30%, pressure loss may increase. When the porosity is above 80%, the strength and the thermal conductivity may be lowered. The porosity is a value obtained by measurement using a mercury porosimeter.

The honeycomb segment constituting a honeycomb structure of the present embodiment has a mean pore size of preferably 5 to 50 µm, more preferably 7 to 35 µm. The mean pore size in such a range enables to effectively trap particulate matter (PM). When the mean pore size is below 5 µm, clogging may be caused due to the particulate matter (PM). When the mean pore size is above 50 µm, particulate matter (PM) may pass through the filter without being trapped. The mean pore diameter is a value obtained by measurement using a mercury porosimeter.

In the case that the material for the honeycomb segment constituting the honeycomb structure of the present embodiment is silicon carbide, it is preferable that the silicon carbide particles have a mean particle size of 5 to 100 µm. The mean particle size in such a range has an advantage of easily controlling the porosity and the pore size to be suitable for the filter. When the mean particle size is smaller than 5 µm, the pore size becomes too small. When it is larger than 100 µm, porosity becomes too high. When the pore size is too small, clogging is easily caused by the particulate matter (PM) . When the porosity is too high, pressure loss may increase. The mean particle size of the raw material is a value measured according to JIS R 1629.

There is no particular limitation on a cell shape (cell shape in a cross section perpendicular to the central axial direction (cell extension direction) of a honeycomb structure) of the honeycomb segment constituting a honeycomb structure of the present embodiment, and there may be employed, for example, a triangle, a quadrangle, a hexagon, an octagon, a circle, or a combination thereof for each of the first cells and the second cells. Of these, as shown in Figs. 2 and 3, it is preferable that the first cell 1a having a larger cross-sectional area is octagonal and that the second cell 1b having a smaller cross-sectional area is quadrangular. In addition, it is also preferable that the first cell has a quadrangular shape with the corner portions having a round R shape and that the second cell has a quadrangular shape. In addition, though there is no particular limitation on the cell density of the honeycomb segment, it is preferably 0.9 to 311 cells/cm², more preferably 7.8 to 62 cells/cm².

In the honeycomb structure of the present embodiment, the cross sectional area of the first cell is larger than that of the second cell. Here, the "cross sectional area of the first cell" or the "cross sectional area of the second cell" means the "area in a cross section perpendicular to the central axial direction (cell extension direction) of a honeycomb structure" in each cell. In addition, by allowing exhaust gas to flow in from the open end portion side of the first cells (one end portion side), to pass through the partition wall, and to be discharged from the open end portion side (the other end portion side) of the second cells, particulate matter in the exhaust gas can be trapped on the surface of the partition walls having a large surface area inside the first cells. Therefore, clogging of the cells on the inflow side due to particulate matter can be inhibited. In the honeycomb segment constituting the honeycomb structure of the present embodiment, the cross-sectional area of the first cells is preferably 120 to 300%, more preferably 140 to 250% with respect to the cross-sectional area of the second cells. When the cross-sectional area of the first cell is smaller than 120% of the cross-sectional area of the second cell, the effect in inhibiting clogging of the inflow side cells (first cells) may be deteriorated. When the cross-sectional area of the first cell is larger than 300% of the cross-sectional area of the second cell, pressure loss may increase because the cross sectional-area of the outflow side cells (second cells) is small.

In addition, in a cross section perpendicular to the central axial direction of the honeycomb structure of the present embodiment, the number of the honeycomb segments disposed is preferably 4 to 144, more preferably 16 to 100. As the size of the honeycomb segment, the cross-sectional area perpendicular to the central axis is preferably 3 to 16 cm², more preferably 7 to 13 cm². When it is smaller than 3 cm², pressure loss when gas passes through the honeycomb structure may increase. When it is larger than 16 cm², the effect in inhibiting fracture of the honeycomb segment may be deteriorated.

As shown in Figs. 1 and 2, the honeycomb structure of the present embodiment has plugging portions 6 in end portions 13 on one side of the second cells 1b and in the end portions 14 on the other side of the first cells 1a of the honeycomb segment 4, and the first cells 1a and the second cells 1b are alternately disposed in such a manner that the end faces of the honeycomb segment 4 show a checkerwise pattern.

The filler layer 11 constituting the honeycomb structure of the present embodiment is disposed between adjacent honeycomb segments 4 and 4, and the honeycomb segments are bonded together by means of the filler layer 11. The bondingmember is preferably disposed over the whole side faces 5 and 5 facing each other of the adjacent honeycomb segments 4 and 4. The material for the filler layer 11 is preferably slurry or the like obtained by kneading a mixture of inorganic fibers, colloidal silica, kneaded clay, SiC particles, an organic binder, a foaming resin, a dispersant, and water.

There is no particular limitation on the whole shape of the honeycomb structure of the present embodiment, and a desired shape such as a circular cylindrical shape or an oval shape may be employed. In addition, as the size of the honeycomb structure, in the case of a cylindrical shape, the bottom face has a diameter of preferably 50 to 450 mm, more preferably 100 to 350 mm. In addition, a length in the central axial direction of the honeycomb structure is preferably 50 to 450 mm, and more preferably 100 to 350 mm.

### (2) Method for manufacturing honeycomb structure:

Next, a method for manufacturing an embodiment of a honeycomb structure of the present invention will be described.

In the first place, to a ceramic raw material are added a surfactant, a pore former, water, and the like to obtain a forming raw material. The ceramic raw material is preferably at least one kind selected from the group consisting of silicon carbide, silicon-silicon carbide based composite material, cordierite, mullite, alumina, spinel, a silicon carbide-cordierite based composite material, lithium aluminum silicate, aluminum titanate, and an iron-chrome-aluminumalloy. Of these, silicon carbide and a silicon-silicon carbide based composite material are preferable. In the case of a silicon-silicon carbide based composite material, a mixture of a silicon carbide powder and a metal silicon powder is used as the ceramic raw material.

As the binder, there can be employed methyl cellulose, hydroxypropoxyl cellulose, hycroxyethyl cellulose, carboxymethyl cellulose, polyvinyl alchohol, or the like. Of these, it is preferable to use methyl cellulose and hydroxypropoxyl cellulose together.

As the surfactant, ethylene glycol, dextrin, fatty acid soap, polyalcohol, or the like can be used. These may be used alone or in combination of two or more.

There is no particular limitation on the pore former as long as it forms pores after firing, and, for example, starch, a resin balloon, water-absorbing resin, silica gel, or the like may be employed.

Next, the forming raw material is kneaded to form kneaded clay. There is no particular limitation on the method for forming kneaded clay by kneading the forming raw material, and, for example, a method using a kneader or a vacuum kneader can be employed.

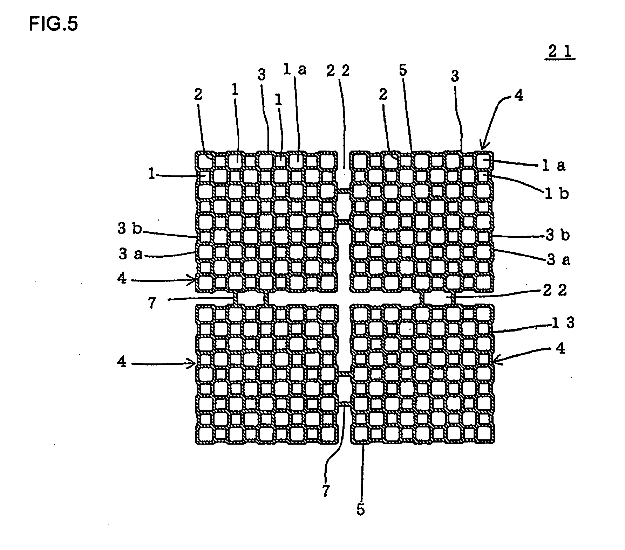

Next, the kneaded clay is subjected to extrusion forming to obtain a honeycomb formed article 21 as shown in Figs. 4 and 5. Upon extrusion forming, there is preferably used a die having desired segment shape, disposition of the segment, shape of connecting members, disposition of the connecting members, cell shape, partition wall thickness, cell density, and the like. As the material for the die, a superhard alloy hardly abrading away can preferably be used. The honeycomb formed article 21 is a connection type honeycomb formed article 21 provided with a plurality of honeycomb segments 4 connected by the connecting members 7 and the outer peripheral portion 12 disposed in the outermost periphery of the honeycomb segments 4. In more detail, the honeycomb formed article 21 is provided with a plurality of "honeycomb segments 4 having porous partition walls 2 separating and forming a plurality of cells 1 functioning as fluid passages and an outer peripheral wall 3 located in the outermost periphery, the first cells 1a and the second cells 1b being alternately disposed with the first cells 1a having an area larger than that of the second cells 1b in a cross section perpendicular to the central axial direction", and the honeycomb segments 4 are disposed with a gap 22 between side faces 5 facing each other, and further two or more plate-shaped connecting members 7 for connecting the side faces 5 facing each other and extending from one end portion 13 to the other end portion 14 are provided for each pair of side faces 5 facing each other. In addition, an outer peripheral wall 3 constituting a side face 5 in contact with the gap 22 in the honeycomb segment 4 has protruding portions 3a along an external shape of the first cells 1a and depressed portions 3b along an external shape of the second cells 1b. Fig. 4 is a perspective view schematically showing a honeycomb formed article formed in the process of manufacturing an embodiment of a honeycomb structure of the present invention. Fig. 5 is an enlarged plan view schematically showing the region B of Fig. 4. Incidentally, in Fig. 4, the connecting member is omitted.

The shape of the honeycomb formed article 21 can appropriately be determined in accordance with the honeycomb structure of the present invention described above to be manufactured in consideration of shrinkage by drying and firing.

It is preferable that the obtained honeycomb formed article 21 is dried before firing. There is no particular limitation on the method for drying, and there may be employed, for example, an electromagnetic wave heating method such as microwave heat-drying and high frequency dielectric heat-drying or an external heating method such as hot air drying and superheated steamdrying. Of these, in that the whole formed article can be dried quickly and uniformly without causing a crack, it is preferable that, after drying a certain amount of water by an electromagnetic wave heating method, the remaining water is dried by an external heating method. As the drying conditions, it is preferable that, after removing water of 30 to 90 mass% with respect to the water content before drying by an electromagnetic wave heating method, water content is reduced to 3 mass% or less by an external heating method. A dielectric heat-drying is preferable in the case of an electromagnetic wave heating method, and hot air drying is preferable in the case of an external heating method.

Next, in the case that the honeycomb formed article 21 does not have desired length in the central axial direction, both the end portions are cut away to obtain the desired length. Though there is no particular limitation on the method for cutting, a method using a circular sawing machine or the like may be employed.

Next, it is preferable that the honeycomb formed article is fired to obtain a honeycomb fired article. Before firing, in order to remove the binder or the like, calcination is preferably performed. The calcination is preferably performed at 400 to 500°C for 0.5 to 20 hours in an ambient atmosphere. There is no particular limitation on the method for the calcination and firing, and firing can be performed by the use of an electric furnace, a gas furnace, or the like. Preferable conditions are 1300 to 1500°C for 1 to 20 hours in an inert atmosphere such as nitrogen, argon, or the like.

Next, plugging is preferably performed in the end portions on one side of the second cells having smaller area in a cross section perpendicular to the central axis and the end portions on the other side of the first cells having a larger area in a cross section perpendicular to the central axis of the honeycomb formed article (plugging portions are formed) to obtain a plugged honeycomb fired article. There is no particular limitation on the method for plugging, and, for example, the following method can be employed. After applying a sheet on one side end face of the honeycomb formed article, holes are made in positions corresponding with the cells (the second cells) to be plugged of the sheet. Then, the end face having the sheet applied thereon of the honeycomb fired article is immersed in plugging slurry obtained by slurrying the constituent material for plugging portions to fill the plugging slurry in the open end portions of the cells (second cells) to be plugged through the holes made in the sheet. Regarding the other side end face of the honeycomb fired article, plugging is performed (the plugging slurry is filled) in the cells (first cells) having no plugging on the one side end face in the same method as in the method for performing plugging on the aforementioned one side end face. As the constituent material for plugging portions, it is preferable to use the same material as that for the honeycomb formed article. It is preferable that firing is performed in the same conditions as the aforementioned firing conditions after the plugging portions are formed. The forming of the plugging portions may be performed before firing the honeycomb formed article. In this case, it is preferable that, after a plugged honeycomb formed article is formed by forming the plugging portions in the honeycomb formed article, the plugged honeycomb formed article is fired to form a plugged honeycomb fired article.

The filler is filled into the gap formed between adjacent honeycomb segments of the plugged honeycomb fired article to obtain a honeycomb structure 100 shown in Figs. 1 to 3. The filler layer 11 is preferably formed over the whole gap. The filler layer 11 plays a role of buffering (absorbing) the volume change upon thermal expansion or thermal shrinkage of the honeycomb segments and a role of bonding the honeycomb segments. As the method for forming the filler layer 11, there may be employed a method for filling slurry obtained by dispersing a filler, an organic binder, and the like in a dispersion medium such as water (filler slurry) into the gap in the plugged honeycomb fired article. When the slurry is filled into the gap, it is preferable to put the plugged honeycomb fired article having the gap in a sealed container and wrap a tape or the like in the outer periphery lest the slurry should leak out from the outer periphery. When the honeycomb structure having the gap is large, the slurry can be filled without applying high pressure by filling the slurry from a plurality of positions. As the material for the tape wrapped around the outer periphery of the plugged honeycomb fired article having the gap, a material which is not permeated with water such as polyester can be employed. In this case, when slurry is tried to be filled in a state that the honeycomb structure having the gap is immobilized, in the case that the plugged honeycomb fired article is porous, the filler slurry may not spread uniformly in the gap due to absorption of the dispersion medium by the partition walls. Therefore, in such a case, it is preferable to fill the filler slurry with vibrating the plugged honeycomb fired article having the gap by the use of a vibration apparatus. As the vibration apparatus, for example, small type vibration testing machine produced by Asahi Seisakusho, Co., Ltd. can be used. In addition, in order to allow the filler slurry to uniformly enter the gap more easily, it is preferable to subject the inside walls of the gap (outer peripheral walls of honeycomb segments) to a water repellent treatment. As the water repellent treatment, splaying slurry containing SiC particles or the like is preferable. After filling the filler slurry in the gap under pressure, it is preferable to perform drying at 100 to 600°C.

As the filler slurry obtained by adding additives such as an organic binder, a resin balloon, and a dispersant to a filler containing inorganic raw materials such as inorganic fibers, colloidal silica, clay, and SiC particles, and then adding water to the mixture, followed by kneading. The inorganic raw material content in the filler slurry is preferably 20 to 60 mass%. In addition, the organic binder content in the filler slurry is preferably 3 to 20 mass%, the inorganic fiber content is preferably 10 to 40 mass%, and the resin balloon content is preferably 0 to 20 mass%, and the dispersant content is preferably 1 to 10 mass%. In addition, the water content in the filler slurry is preferably 10 to 45 mass%.

After the honeycomb structure is formed, the outer peripheral portion with less unevenness on the outer peripheral face may be formed by performing an outer peripheral coat treatment. As the outer peripheral coat treatment, there may be employed a method where an outer peripheral coat material is applied on the outer peripheral portion of the honeycomb structure, followed by drying. As the outer peripheral coat material, there may be used a mixture of inorganic fibers, colloidal silica, clay, SiC particles, an organic binder, a resin balloon, a dispersant, and water. There is no particular limitation on the method for applying the outer periphery coat material, and there may be employed a method where the material is coated by the use of a rubber spatula with rotating a honeycomb structure on a potter's wheel.

### Example

Hereinbelow, the present invention will be described more specifically with referring to Examples. However, the present invention is by no means limited to these Examples.

### (Example 1)

As the ceramic raw material, a SiC powder and a metal Si powder were mixed at a mass ratio of 80:20, and to the mixture were added methyl cellulose and hydroxypropoxy methyl cellulose as forming auxiliaries, starch and water absorbing resin as pore formers, a surfactant, and water, followed by kneading with a vacuum kneader to obtain kneaded clay having a circular cylindrical shape.

The kneaded clay having a circular cylindrical shape obtained above was formed into a cylindrical honeycomb shape of a segment connection type by the use of an extrusion-forming machine and then subjected to high frequency dielectric heat-drying and following drying at 120°C for 2 hours by the use of a hot air drier, followed by cutting both the end faces at a predetermined amount to obtain a segment connection type honeycomb formed article having a shape like the honeycomb formed article 21 shown in Figs. 4 and 5. In each of the honeycomb segments, in a cross section perpendicular to the central axial direction, the first cells having a larger area and the second cells having a smaller area were alternately aligned. As the honeycomb segment formation pattern, as the formation pattern of the gaps 22 in the honeycomb formed article 21 shown in Figs. 4 and 5, three parallel gaps and other three parallel gaps perpendicular to the former three gaps were formed at regular intervals on an end face of the honeycomb formed article 21 to obtain 16 honeycomb segments (gap pattern: 3×3).

In the honeycomb formed article obtained above, a plugging portion was formed in an end portion of each cell in such a manner that adjacent cells were plugged in mutually opposite end portions so that both the end face showed a checkerwise pattern. As the filler for plugging, the same material as that for the honeycomb formed article was used.

After the plugging, the plugged honeycomb formed article was dried at 120°C for five hours by the use of a hot air drier, degreased at about 450°C for five hours by the use of an atmospheric furnace with a deodorizer in an ambient atmosphere, and then fired at about 1450°C for five hours in an Ar inert atmosphere to obtain a plugged porous honeycomb fired article where SiC crystal particles were bonded with Si. The honeycomb fired article had a mean pore size of 13 µm and a porosity of 41%. The mean pore size and the porosity were measured by a mercury porosimeter.

The filler was slurried and filled into the gaps of the plugged honeycomb fired article to form a filler layer, and thereby a honeycomb structure was obtained. As the filler, a mixture of aluminosilicate inorganic fibers and SiC particles was used. As the slurry containing the filler, there was used slurry containing 30 parts by mass of water, 30 parts by mass of aluminosilicate, and 30 parts by mass of SiC particles with respect to 100 parts by mass of the filler. Upon filling the slurry into the gaps, the plugged honeycomb fired article was put in a sealed container, a polyester based tape produced by Sumitomo 3M Limited was wrapped around the outer periphery lest the slurry should leak out from the outer periphery, and the slurry was put in the gaps under pressure.

The honeycomb structure obtained above had a partition wall thickness t1 of 0.38 mm, a bottom face diameter of 145 mm, and a length in the central axial direction of 155mm. In addition, the connecting member had a thickness of 0.38 mm. Two connecting members were formed for each gap between two adjacent honeycomb segments. The height (height of protruding portion based on the depressed portion) H of the outer peripheral wall of each honeycomb segment was 0.16 mm. In addition, the "distance D1 between protruding portions" between two adjacent honeycomb segments was 0.3 mm. Therefore, the distance D2 between the depressed portions was 0.62 mm. In addition, the width W1 of the first cells was 1.24 mm, and the width W2 of the second cells was 0.92 mm. The partition wall thickness T1 of the protruding portions was 0.38 mm, and the partition wall thickness T2 of the depressed portions was 0.38 mm. In addition, the cross-sectional area of the first cells in a cross section perpendicular to the central axis is 1.75 times the cross-sectional area of the second cells.

In addition, in a cross section perpendicular to the central axis, the connecting members were formed in portions (protruding portions 3a) where no partition wall was connected on the outer peripheral walls of the honeycomb segments. Thus, the position in the case that the connecting member was formed in the "portion where no partition wall was connected" is referred to as the "connecting member position A", while, as in the honeycomb structure 101 shown in Fig. 6, the position in the case that the connecting member 7 was disposed in the portion where the partition wall 2 was connected on the outer peripheral wall 3 of the honeycomb segment 4 is referred to as the "connecting member portion B".

The honeycomb structure obtained above was evaluated for "isostatic strength", "hot vibration test", "regeneration limit", and "pressure loss" by the following methods. The results are shown in Table 1. In Table 1, regarding Examples 1 to 14, 23 to 32 and Comparative Examples 2, 3, and 6, the "isostatic strength", "regeneration limit", and "pressure loss" show increase or decrease with respect to Comparative Example 1 with employing the results of the Comparative Example 1 as the standards, and, regarding Examples 15 to 22, 33 to 38, and Comparative Example 5, "isostatic strength", "regeneration limit", and "pressure loss" show increase or decrease with respect to Comparative Example 4 with employing the results of the Comparative Example 4 as the standards.

### (Isostatic strength)

Isostatic strength was measured according to the method for measuring isostatic fracture strength prescribed in JASO standard M505-87, which is an automotive standard issued by Society of Automotive Engineers of Japan.

### (Hot vibration test)

With an inlet gas temperature of 900°C, a vibration acceleration of 50G, a vibration frequency of 200Hz, heated exhaust gas was allowed to flow into an exhaust gas purification apparatus, and vibrations due to exhaust gas were applied in an axial direction of the honeycomb structure. The evaluations were given as "excellent" in the case that the moving amount (displacement) of the "honeycomb structure" after 300 hours is below 0.2 mm, "good" in the case of 0.2 to 0.4 mm, and "fair" in the case of 0.4 to 0.6 mm (excluding 0.4 mm). The displacement of the abutting faces after 300 hours is 0.6 mm or less is not a problem for practical use, it is preferably 0.4 mm or less.

### (Regeneration limit)

Using the honeycomb structure as a DPF, the soot deposition amount was gradually increased to perform regeneration (soot combustion) and confirm the limit where a crack generated. In the first place, a ceramic non-intumescent mat was wrapped around the outer periphery of the honeycomb structure obtained above as the holding material, and they were put in a can made of SUS409 to obtain a canning structure. Then, combustion gas containing soot generated by combustion of a diesel fuel (light oil) was allowed to flow into the honeycomb structure from an end face on the side where the first cells 1 are open and discharged from the other end face of the honeycomb structure, thereby depositing the soot inside the honeycomb structure. After the honeycomb structure was cooled down to room temperature, combustion gas containing oxygen at a predetermined rate at 680°C was allowed to flow into the honeycomb structure, and the combustion gas flow rate was reduced when the pressure loss of the honeycomb structure was lowered, thereby rapidly combusting soot. Then, the presence/absence of crack generation in the plugged honeycomb structure was confirmed. This test was started when the soot deposition amount was 4g per 1 liter (hereinbelow referred to as 4 g/liter or the like) of the capacity of the honeycomb structure, and the soot deposition amount was increased by 0.5 (g/liter) until crack generation was confirmed, which was repeated. The regeneration limit was obtained from the measurement results (average value of measurement of 5 (N=5) honeycomb structures in each Example) of the regeneration limit value (soot amount when the initial crack generated) (g/liter) in the honeycomb structures in each Example.

### (Pressure loss)

Pressure loss of a honeycomb structure was measured by the use of a "pressure loss measurement apparatus for a filter" described in JP-A-2005-172652. As the measurement conditions, the fluid flow rate was 10 Nm³/min., and the fluid temperature in the experiment was 25°C.

**Table 1 - 1**

| | W1 (mm) | W2 (mm) | H (mm) | D1 (mm) | D2 (mm) | t1 (mm) | T1 (mm) | T2 (mm) |
|---|---|---|---|---|---|---|---|---|
| Example 1 | 1.24 | 0.92 | 0.160 | 0.3 | 0.62 | 0.38 | 0.38 | 0.38 |
| Example 2 | 1.24 | 0.92 | 0.080 | 0.1 | 0.26 | 0.38 | 0.30 | 0.38 |
| Example 3 | 1.24 | 0.92 | 0.180 | 0.1 | 0.46 | 0.38 | 0.40 | 0.38 |
| Example 4 | 1.24 | 0.92 | 0.580 | 0.2 | 1.36 | 0.38 | 0.80 | 0.38 |
| Example 5 | 1.24 | 0.92 | 0.780 | 0.4 | 1.96 | 0.38 | 1.00 | 0.38 |
| Example 6 | 1.24 | 0.92 | 1.000 | 2.2 | 4.20 | 0.38 | 1.22 | 0.38 |
| Example 7 | 1.24 | 0.92 | 1.080 | 1.0 | 3.16 | 0.38 | 1.30 | 0.38 |
| Example 8 | 1.24 | 0.92 | 0.090 | 1.2 | 1.38 | 0.38 | 0.38 | 0.45 |
| Example 9 | 1.24 | 0.92 | 0.240 | 0.5 | 0.98 | 0.38 | 0.38 | 0.30 |
| Example 10 | 1.24 | 0.92 | 0.340 | 1.0 | 1.68 | 0.38 | 0.38 | 0.20 |
| Example 11 | 1.24 | 0.92 | 0.160 | 0.8 | 1.12 | 0.38 | 0.20 | 0.20 |
| Example 12 | 1.24 | 0.92 | 0.960 | 0.8 | 2.72 | 0.38 | 1.00 | 0.20 |
| Example 13 | 1.24 | 0.92 | 0.160 | 0.3 | 0.62 | 0.38 | 0.38 | 0.38 |
| Example 14 | 1.24 | 0.92 | 0.580 | 0.2 | 1.36 | 0.38 | 0.80 | 0.38 |
| Example 15 | 1.26 | 0.95 | 0.105 | 0.3 | 0.51 | 0.25 | 0.20 | 0.25 |
| Example 16 | 1.26 | 0.95 | 0.905 | 0.3 | 2.11 | 0.25 | 1.00 | 0.25 |
| Example 17 | 1.26 | 0.95 | 1.305 | 0.3 | 2.91 | 0.25 | 1.40 | 0.25 |
| Example 18 | 1.26 | 0.95 | 0.155 | 0.3 | 0.61 | 0.25 | 0.20 | 0.20 |
| Example 19 | 1.26 | 0.95 | 0.955 | 0.3 | 2.21 | 0.25 | 1.00 | 0.20 |
| Example 20 | 1.26 | 0.95 | 1.355 | 0.3 | 3.01 | 0.25 | 1.40 | 0.20 |
| Example 21 | 1.26 | 0.95 | 0.105 | 0.3 | 0.51 | 0.25 | 0.20 | 0.25 |
| Example 22 | 1.26 | 0.95 | 0.955 | 0.3 | 2.21 | 0.25 | 1.00 | 0.20 |

**Table 1 - 2**

| | Connecting member thickness (mm) | Number of connecting member | Connecting member position | Isostatic strength (%) | Hot vibration test | Regeneration limit (g/liter) | Pressure loss (%) |
|---|---|---|---|---|---|---|---|
| Example 1 | 0.38 | 2 | A | 0 | Excellent | +0.1 | -2 |
| Example 2 | 0.38 | 2 | B | 0 | Good | +0.1 | -3 |
| Example 3 | 0.38 | 2 | A | 0 | Excellent | +0.1 | -3 |
| Example 4 | 0.38 | 2 | B | 0 | Excellent | +0.2 | 0 |
| Example 5 | 0.38 | 2 | A | 0 | Excellent | +0.3 | +2 |
| Example 6 | 0.38 | 2 | B | 0 | Excellent | +0.5 | +4 |
| Example 7 | 0.38 | 2 | B | 0 | Excellent | +0.5 | +3 |
| Example 8 | 0.43 | 3 | B | 0 | Good | +0.2 | +2 |
| Example 9 | 0.45 | 3 | B | 0 | Excellent | +0.1 | 0 |
| Example 10 | 0.43 | 3 | B | 0 | Excellent | +0.2 | +1 |
| Example 11 | 0.36 | 2 | B | 0 | Excellent | +0.1 | 0 |
| Example 12 | 0.36 | 2 | B | 0 | Excellent | +0.2 | +2 |
| Example 13 | 0.38 | 2 | A | 0 | Excellent | +0.1 | -2 |
| Example 14 | 0.38 | 2 | A | 0 | Excellent | +0.2 | 0 |
| Example 15 | 0.25 | 2 | B | 0 | Excellent | +0.1 | -3 |
| Example 16 | 0.20 | 2 | B | 0 | Excellent | +0.2 | 0 |
| Example 17 | 0.25 | 2 | B | 0 | Excellent | +0.3 | +1 |
| Example 18 | 0.30 | 2 | B | 0 | Excellent | +0.1 | -2 |
| Example 19 | 0.30 | 2 | B | 0 | Excellent | +0.2 | +1 |
| Example 20 | 0.25 | 4 | B | 0 | Excellent | +0.3 | +2 |
| Example 21 | 0.25 | 2 | A | 0 | Excellent | +0.1 | -3 |
| Example 22 | 0.30 | 2 | A | 0 | Excellent | +0.2 | +1 |

**Table 2 - 1**

| | W1 (mm) | W2 (mm) | H (mm) | D1 (mm) | D2 (mm) | t1 (mm) | T1 (mm) | T2 (mm) |
|---|---|---|---|---|---|---|---|---|
| Example 23 | 1.24 | 0.92 | 0.160 | 0.3 | 0.62 | 0.38 | 0.39 | 0.39 |
| Example 24 | 1.24 | 0.92 | 0.160 | 0.3 | 0.62 | 0.38 | 0.58 | 0.58 |
| Example 25 | 1.24 | 0.92 | 0.160 | 0.5 | 0.82 | 0.38 | 0.76 | 0.76 |
| Example 26 | 1.24 | 0.92 | 0.160 | 0.3 | 0.62 | 0.38 | 0.85 | 0.85 |
| Example 27 | 1.24 | 0.92 | 0.350 | 0.3 | 1.00 | 0.38 | 0.58 | 0.39 |
| Example 28 | 1.24 | 0.92 | 0.340 | 0.8 | 1.48 | 0.38 | 0.76 | 0.58 |
| Example 29 | 1.24 | 0.92 | 0.250 | 0.5 | 1.00 | 0.38 | 0.85 | 0.76 |
| Example 30 | 1.24 | 0.92 | 0.100 | 0.4 | 0.60 | 0.38 | 0.39 | 0.45 |
| Example 31 | 1.24 | 0.92 | 0.100 | 0.4 | 0.60 | 0.38 | 0.58 | 0.64 |
| Example 32 | 1.24 | 0.92 | 0.100 | 0.4 | 0.60 | 0.38 | 0.76 | 0.82 |
| Example 33 | 1.26 | 0.95 | 0.155 | 0.3 | 0.61 | 0.25 | 0.26 | 0.26 |
| Example 34 | 1.26 | 0.95 | 0.155 | 0.3 | 0.61 | 0.25 | 0.50 | 0.50 |
| Example 35 | 1.26 | 0.95 | 0.155 | 0.3 | 0.61 | 0.25 | 0.62 | 0.62 |
| Example 36 | 1.26 | 0.95 | 0.265 | 0.5 | 1.03 | 0.25 | 0.41 | 0.30 |
| Example 37 | 1.26 | 0.95 | 0.245 | 0.3 | 0.79 | 0.25 | 0.50 | 0.41 |
| Example 38 | 1.26 | 0.95 | 0.105 | 0.6 | 0.81 | 0.25 | 0.27 | 0.32 |
| Comp. Ex. 1 | 1.24 | 0.92 | 0.000 | 0.5 | 0.5 | 0.38 | 0.38 | 0.38 |
| Comp. Ex. 2 | 1.24 | 0.92 | 0.000 | 1.6 | 1.6 | 0.38 | 0.30 | 0.30 |
| Comp. Ex. 3 | 1.24 | 0.92 | 0.000 | 3.0 | 3.0 | 0.38 | 0.20 | 0.20 |
| Comp. Ex. 4 | 1.26 | 0.95 | 0.000 | 0.2 | 0.2 | 0.25 | 0.25 | 0.25 |
| Comp. Ex. 5 | 1.26 | 0.95 | 0.000 | 1.7 | 1.7 | 0.25 | 0.20 | 0.20 |
| Comp. Ex. 6 | 1.24 | 0.92 | 0.160 | 0.3 | 0.6 | 0.38 | 0.38 | 0.38 |

**Table 2 - 2**

| | Connecting member thickness (mm) | Number of connecting member | Connecting member position | Isostatic strength (%) | Hot vibration test | Regeneration limit (g/liter) | Pressure loss (%) |
|---|---|---|---|---|---|---|---|
| Example 23 | 0.38 | 2 | B | +3 | Excellent | +0.2 | -2 |
| Example 24 | 0.38 | 2 | B | +6 | Excellent | +0.4 | -1 |
| Example 25 | 0.38 | 2 | B | +9 | Excellent | +0.7 | +1 |
| Example 26 | 0.38 | 2 | B | +12 | Excellent | +0.9 | +2 |
| Example 27 | 0.43 | 2 | A | +3 | Excellent | +0.3 | -2 |
| Example 28 | 0.43 | 3 | A | +6 | Excellent | +0.6 | 0 |
| Example 29 | 0.43 | 4 | A | +9 | Excellent | +0.8 | +1 |
| Example 30 | 0.38 | 3 | B | +3 | Excellent | +0.3 | -2 |
| Example 31 | 0.38 | 3 | B | +6 | Excellent | +0.5 | 0 |
| Example 32 | 0.38 | 3 | B | +9 | Excellent | +0.8 | +1 |
| Example 33 | 0.25 | 2 | B | +3 | Excellent | +0.2 | -3 |
| Example 34 | 0.22 | 2 | B | +8 | Excellent | +0.5 | -2 |
| Example 35 | 0.25 | 2 | B | +11 | Excellent | +0.7 | -1 |
| Example 36 | 0.22 | 2 | B | +4 | Excellent | +0.4 | -2 |
| Example 37 | 0.25 | 3 | B | +6 | Excellent | +0.5 | -2 |
| Example 38 | 0.25 | 2 | B | +3 | Excellent | +0.3 | -3 |
| Comp. Ex. 1 | - | - | - | - | Fair | - | - |
| Comp. Ex. 2 | - | - | - | 0 | Fair | -0.1 | +2 |
| Comp. Ex. 3 | - | - | - | 0 | Fair | -0.2 | +3 |
| Comp. Ex. 4 | - | - | - | - | Fair | - | - |
| Comp. Ex. 5 | - | - | - | 0 | Fair | -0.1 | +1 |
| Comp. Ex. 6 | 0.38 | 1 | B | Deterioration in forming yield | | | |

### (Examples 2 to 12, 15 to 20, 23 to 38, and Comparative Example 6)

Honeycomb structures were manufactured in the same manner as in Example 1 except that the width W1 of the first cell, width W2 of the second cell, partition wall thickness t1, partition wall thickness T1 of the protruding portions, partition wall thickness T2 of the depressed portions, height H of the protruding portions of the outer peripheral wall, distance D1 between protruding portions, distance D2 between depressed portions, thickness of connecting members, number of connecting members, and portions of connecting members were changed as shown in Tables 1 and 2. The evaluations for "isostatic strength", "hot vibration test", "regeneration limit", and "pressure loss" were given in the same manner as in Example 1. The results are shown in Table 1.

### (Examples 13, 14, 21 and 22)

Honeycomb structures were manufactured in the same manner as in Example 1 except that the honeycomb structures 102 where the honeycomb segments 4a having the first cell 1a in each of the corner portions and the honeycomb segment 4b having the second cell 1b in each of the corner portions are adjacently formed as shown in Fig. 7 and that the width W1 of the first cell, width W2 of the second cell, partition wall thickness t1, partition wall thickness T1 of the protruding portions, partition wall thickness T2 of the depression portions, height H of the protruding portions of the outer peripheral wall, distance D1 between protruding portions, and distance D2 between depressed portions were changed. Fig. 7 is a plan view schematically showing a part of one end face of a honeycomb structure 102 manufactured in Examples (Examples 13, 14, 21, and 22). The honeycomb structures obtained were evaluated for "isostatic strength", "hot vibration test", "regeneration limit", and "pressure loss" were given in the same manner as in Example 1. The results are shown in Table 1.

### (Comparative Examples 1 to 5)

Honeycomb structures having the same shape as in Example 1 were manufactured by linearly forming the outer peripheral walls (H=0) of the honeycomb segments in a cross section perpendicular to the central axial direction without forming protruding portions and depressed portions on the outer peripheral wall; changing the width W1 of the first cell, width W2 of the second cell, and partition wall thickness t1 as shown in Table 1; bonding the honeycomb segments by the use of the filler in Example 1 as the bonding material in the same manner as in JP-A-2003-291054; grinding the outer periphery; and subjecting the outer periphery to coating of outer periphery with a mixture of inorganic fibers, colloidal silica, clay, SiC particles, an organic binder, a resin balloon, a dispersant, and water. The same manner as in JP-A-2003-291054 is as follows: The aforementioned filler (bonding material) is applied to the side faces, i.e., bonding faces of the honeycomb segments, and cardboards are disposed on top of and at the bottom of the side face, followed by bonding under pressure and drying, thereby bonding the honeycomb segments. The cardboards were used as spacers with the size of 30 mm × 8 mm and a thickness of D1 in Table 2. Incidentally, since neither protruding portions nor depressed portions were formed on the outer peripheral walls of the honeycomb segments, T1 and T2 do not show partition wall thickness of protruding portions and depressed portions but show the corresponding thickness of the outer peripheral wall having a uniform thickness. Therefore, T1 and T2 show the same values. The same is applied to D1 and D2. In addition, the first cells and the second cells of the outer peripheral portions of the honeycomb segments were small because of forming no protrusions and no depressions on the outer peripheral walls. The honeycomb structures obtained were evaluated for "isostatic strength", "hot vibration test", "regeneration limit", and "pressure loss" were given in the same manner as in Example 1. The results are shown in Table 1.

From Table 1, it can be understood that the honeycomb structures of Examples 1 to 22 showed good results of evaluations for isostatic strength, hot vibration test, regeneration limit, and pressure loss. In particular, good results were shown in the evaluations for the hot vibration test and the regeneration limit. In contrast, in honeycomb structures of Comparative Examples 1 to 5, it can be understood that the evaluation results of the hot vibration test and the regeneration limit were bad since the outer peripheral walls have no protruding portions and depressed portions formed thereon. In addition, in the honeycomb structure of Comparative Example 6, since only one connecting member was formed in each gap between honeycomb segments, shape maintainability of the formed article after extrusion forming was bad to deteriorate forming yield by 10% in comparison with the other Examples. Therefore, it was assumed that there were a problem of production costs, and the honeycomb structure was not evaluated further.

The honeycomb structure of the present invention can suitably be used as a carrier for a catalytic device or a filter used for an environmental measure, collection of a specific material or the like in various fields such as chemistry, electric power, and iron and steel.

## Claims

1. A honeycomb structure comprising a plurality of honeycomb segments (4) having porous partition walls (2) separating and forming a plurality of cells (1) functioning as fluid passages and an outer peripheral wall (3) located at the outermost periphery of the segment, the cells including first cells (1a) each open at a first end portion of the structure and plugged at the other end portion and second cells (1b) plugged at the first endportion and open at the other endportion, and the first cells (1a) and the second cells (1b) being alternately disposed, and the first cells having an area larger than that of the second cells in a cross section perpendicular to a central axial direction of the structure,
wherein the honeycomb segments are disposed with a gap between respective side faces (5) of the segments facing each other, and
a filler layer (11) disposed in the gap is provided, **characterized in that**
two or more plate-shaped connecting members (7) connecting the side faces facing each other so as to connect the honeycomb segments to each other and extending from the first end portion to the other end portion are provided for each pair of said side faces facing each other, said honeycomb segments (4) and said connecting members (7) are together a unitary structure, and
said outer peripheral wall (3) of the honeycomb segment constituting a side face in contact with the filler layer (11)has protruding portions (3a) corresponding to an external shape of the first cells (1a) and depressed portions (3b) corresponding to an external shape of the second cells (1b).

2. The honeycomb structure according to Claim 1, wherein the height of the protruding portions (3a) of the outer peripheral wall is 0.1 to 1.0 mm based on the depressed portion (3b) of the outer peripheral wall (3) of the honeycomb segment.

3. The honeycomb structure according to Claim 1 or 2, wherein, in a pair of facing outer peripheral walls (3) of adjacent honeycomb segments, the distance from the depressed portion (3b) of one outer peripheral wall to the depressed portion (3b) of the other peripheral wall is 0.3 to 3.0 mm.

4. The honeycomb structure according to any one of Claims 1 to 3, wherein the plate-shaped connecting members (7) have a thickness of 0.20 to 0.45 mm.

## Patentansprüche

1. Wabenstruktur, die eine Vielzahl von Wabensegmenten (4) mit porösen Trennwänden (2), die eine Vielzahl von Zellen (1) trennen und bilden, welche als Fluiddurchlässe wirken, und eine am äußersten Umfang des Segments angeordnete Außenumfangswand (3) umfasst, wobei die Zellen erste Zellen (1a), die jeweils an einem ersten Endabschnitt der Struktur offen und am anderen Endabschnitt geschlossen sind, und zweite Zellen (1 b), die am ersten Endabschnitt verschlossen und am anderen Endabschnitt offen sind, umfasst und die ersten Zellen (1a) und die zweiten Zellen (1 b) abwechselnd angeordnet sind und die ersten Zellen in einem auf eine Mittelachsrichtung der Struktur senkrechten Querschnitt eine größere Fläche aufweisen als die zweiten Zellen,
worin die Wagensegmente mit einem Spalt zwischen den jeweiligen Seitenflächen (5) der einander zugewandten Segmente angeordnet sind und
eine im Spalt angeordnete Füllschicht (11) bereitgestellt ist,
**dadurch gekennzeichnet, dass**
für jedes Paar der jeweils einander zugewandten Seitenflächen zwei oder mehrere plattenförmige Verbindungselemente (7) bereitgestellt sind, die die einander zugewandten Seitenflächen miteinander verbinden und sich vom ersten Endabschnitt zum anderen Endabschnitt erstrecken, wobei die Wabensegmente (4) und die Verbindungselemente (7) zusammen eine einheitliche Struktur sind, und
wobei die Außenumfangswand (3) des Wabensegments, die eine Seitenfläche im Kontakt mit der Füllschicht (11) darstellt, vorragende Abschnitte (3a), die einer äußeren Form der ersten Zellen (1a) entsprechen, und vertiefte Abschnitte (3b), die einer äußeren Form der zweiten Zellen (1 b) entsprechen, aufweist.

2. Wabenstruktur nach Anspruch 1, worin die Höhe der vorragenden Abschnitte (3a) der Außenumfangswand, bezogen auf den vertieften Abschnitt (3b) der Außenumfangswand (3) des Wabensegments, 0,1 bis 1,0 mm beträgt.

3. Wabenstruktur nach Anspruch 1 oder 2, worin in einem Paar einander zugewandter Außenumfangswände (3) benachbarter Wabensegmente die Distanz vom vertieften Abschnitt (3b) einer Außenumfangswand zum vertieften Abschnitt (3b) der anderen Umfangswand 0,3 bis 3,0 mm beträgt.

4. Wabenstruktur nach einem der Ansprüche 1 bis 3, worin die plattenförmigen Verbindungselemente (7) eine Dicke von 0,20 bis 0,45 mm aufweisen.

## Revendications

1. Structure en nid d'abeilles comprenant une pluralité de segments de nid d'abeilles (4) comportant des parois de séparation poreuses (2) séparant et formant une pluralité de cellules (1) fonctionnant en tant que passages de fluide et une paroi périphérique extérieure (3) située à la périphérie la plus à l'extérieur du segment, les cellules comprenant des premières cellules (1a) ouvertes chacune au niveau d'une première partie d'extrémité de la structure et obturées au niveau de l'autre partie d'extrémité et des deuxièmes cellules (1b) obturées au niveau de la première partie d'extrémité et ouvertes au niveau de l'autre partie d'extrémité, et les premières cellules (1a) et les deuxièmes cellules (1b) étant disposées alternativement, et les premières cellules ayant une aire plus grande que celle des deuxièmes cellules en coupe transversale perpendiculaire à une direction axiale centrale de la structure,
dans laquelle les segments de nid d'abeilles sont disposés avec un espace entre les faces latérales (5) respectives des segments se faisant mutuellement face, et
une couche de remplissage (11) disposée dans l'espace est prévue,
**caractérisée en ce que**
deux éléments de liaison (7) en forme de plaque ou plus reliant les faces latérales se faisant mutuellement face de manière à relier les segments de nid d'abeilles les uns aux autres et s'étendant de la première partie d'extrémité à l'autre partie d'extrémité sont prévus pour chaque paire desdites faces latérales se faisant mutuellement face, lesdits segments de nid d'abeilles (4) et lesdits éléments de liaison (7) forment, ensemble, une structure unitaire, et
ladite paroi périphérique extérieure (3) du segment de nid d'abeilles constituant une face latérale en contact avec la couche de remplissage (11) comporte des parties saillantes (3a) correspondant à une forme extérieure des premières cellules (1a) et des parties en retrait (3b) correspondant à une forme extérieure des deuxièmes cellules (1b).

2. Structure en nid d'abeilles selon la revendication 1, dans laquelle la hauteur des parties saillantes (3a) de la paroi périphérique extérieure est de 0, 1 à 1, 0 mm sur la base de la partie en retrait (3b) de la paroi périphérique extérieure (3) du segment de nid d'abeilles.

3. Structure en nid d'abeilles selon la revendication 1 ou 2, dans laquelle, dans une paire de parois périphériques extérieures se faisant face (3) de segments de nid d'abeilles adjacents, la distance de la partie en retrait (3b) d'une paroi périphérique extérieure à la partie en retrait (3b) de l'autre paroi périphérique est de 0,3 à 3,0 mm.

4. Structure en nid d'abeilles selon l'une quelconque des revendications 1 à 3, dans laquelle les éléments de liaison en forme de plaque (7) ont une épaisseur de 0,20 à 0,45 mm.
